# EUROPÄISCHE PATENTSCHRIFT

(11) **EP 1 943 439 B1**
(45) Veröffentlichungstag und Bekanntmachung des Hinweises auf die Patenterteilung: **03.04.2013**
(21) Anmeldenummer: 06805786.8
(22) Anmeldetag: 20.09.2006
(51) Int. Cl.: F16H 7/12

(54) **RIEMENSPANNER**
BELT TENSIONER
TENDEUR DE COURROIE

(30) Priorität: 31.10.2005 DE 202005016992 U
(43) Veröffentlichungstag der Anmeldung: 16.07.2008
(73) Patentinhaber: Litens Automotive GmbH, 63571 Gelnhausen (DE)
(72) Erfinder: FISCHER, Michael, 97778 Fellen (DE)
(74) Vertreter: Grünecker, Kinkeldey, Stockmair & Schwanhäusser
(86) Internationale Anmeldenummer: PCT/EP2006/009161
(87) Internationale Veröffentlichungsnummer: WO 2007/051507

(56) Entgegenhaltungen:
- DE-A1- 3 742 030
- DE-A1- 3 801 533
- DE-A1- 4 400 830
- DE-A1- 10 053 186
- DE-A1- 19 524 403

## Beschreibung

Die Erfindung betrifft einen Riemenspanner für den Riementrieb einer Verbrennungskraftmaschine mit den Merkmalen des Oberbegriffs des Anspruchs 1.

Bei einem aus der DE 195 24 403 bekannten Riemenspanner dieser Gattung ist ein Spannarm zum Spannen eines Riementriebs fest mit einer Lagerbuchse verbunden, welche um ein zentrales, zylindrisches Lagerteil drehbar gelagert ist. Zwischen der Lagerhülse und dem Lagerteil ist eine reibreduzierende Hülse vorgesehen. Diese besteht aus einer Bronzefolie mit eingelagertem PTFE, Die Bronzefolie liegt an der Innenfläche der Lagerhülse an und ist hier reibschlüssig festgelegt. Die eingelagerte PTFE-Schicht weist zu dem Lagerteil hin und bildet mit diesem eine Gleitpaarung.

Axial stützt sich die Lagerhülse über eine reibreduzierende Scheibe auf einer Scheibe des Riemenspanners ab. Die reibreduzierende Scheibe besteht aus demselben Material wie die reibreduzierende Hülse und ist über den Reibschluss der Bronzeschicht auf der axialen Endfläche der Lagerhülse rotatorisch festgelegt.

Durch eine Befestigungsvorrichtung, welche sich durch die zentrale Lagerteil erstreckt, wird das zentrale Lagerteil an einem Motorbauteil befestigt. Zugleich wird die Lagerhülse axial auf dem zentralen Lagerteil fixiert und gegen Tellerfedern, welche zwischen dem Motorbauteil und der Lagerhülse vorgesehen sind, vorgespannt. Zwischen der Befestigungsvorrichtung und der Stirnseite der Lagerhülse befindet sich eine Dämpfungsscheibe aus Polyamid 4.6 oder Polyamid 6.6, welche eine Bewegung des Spannarms durch Reibung dämpft. Die Dämpfungsscheibe ist asymmetrisch geformt und wird in einer entsprechend geformten Ausnehmung auf der axialen Stirnfläche der Lagerbuchse aufgenommen und so gegen Verdrehen gesichert.

Der oben beschriebene Riemenspanner weist mehrere unterschiedliche, zum Teil asymmetrisch geformte Gleit- bzw. Reibelemente auf. Die vielen unterschiedlichen Bauteile sind nicht nur ein erhöhter Kostenfaktor im Einkauf, sondern erhöhen auch die Komplexität des Riemenspanners und somit den Aufwand in Konstruktion und Montage. Konstruktiv müssen hier viele unterschiedliche Reib- bzw. Gleitpaarungen ausgelegt werden. Die Montage der Einzelbauteile ist fehleranfällig, da jedes der Bauteile gerichtet eingesetzt werden muss.

Aus der gattungsgemäßen DE 100 53 186 A1 ist ein Riemenspanner bekannt, welcher einen Spannarm aufweist, der an einem Lagerteil drehbar gelagert ist. Der Riemenspanner trägt an seinem Spannarm eine Rolle, die federbelastet gegen den Riemen eines Verbrennungsmotors drückt und im Betrieb eine oszillierende Bewegung ausführt. Der Spannarm dreht mit einer Lagerhülse um ein Lagerteil, welches die Drehachse bildet. Um eine möglichst reibungsfreie Drehung zu ermöglichen, ist zwischen der Lagerhülse und dem Lagerteil eine reibungsverringernde Hülse aus einer Bronzefolie vorgesehen, in welche PTFE eingelagert ist. Ebenfalls aus Bronzefolie mit eingelagerten PTFE ist eine axiale Kräfte zwischen Tellerfedern und der Lagerhülse möglichst reibungsarm abstützende Gleithülse. Um eine gezielte gedämpfte Bewegung bei Auslenkungen und beim Zurückschwenken des Spannarms zu erreichen, ist die Lagerhülse auf der anderen Seite in axialer Richtung mittels einer Reibscheibe aus Polyamid gegen eine Sicherungseinrichtung abgestützt. Um eine bestimmte Dämpfung einstellen zu können wird vorgeschlagen, die Reibscheibe gegenüber der Lagerhülse formschlüssig festzulegen. Die axial gegenüberliegende Fläche der Reibscheibe wird dann mit der Oberfläche so ausgebildet, dass die gewünschte Dämpfungskraft bei einer oszillierenden Bewegung des Spannarms eingestellt wird.

Die DE 44 00 830 A1 und die DE 38 01 533 A1 betreffen Werkstoffe für Lager, in welchen sich ein Element kontinuierlich in eine Richtung dreht.

Der Erfindung liegt daher die Aufgabe zugrunde, einen Riemenspanner dahingehend zu verbessern, dass trotz Vereinfachung der Bauweise und Reduzierung der unterschiedlich ausgebildeten Einzelteile eine gute Funktion des Riemenspanners erhalten bleibt.

Diese Aufgabe wird erfindungsgemäß gelöst mit einem Riemenspanner mit den Merkmalen des Anspruchs 1.

Im Stand der Technik weisen Gleitelemente meist zwei unterschiedliche Flächen auf. Gleitlagerbuchsen beispielsweise besitzen häufig eine Bronzeoberfläche, welche der reibschlüssigen Festlegung der Lagerbuchse in einem ersten Bauteil dient. Zusätzlich weisen sie eine Gleitschicht auf, welche der Bronzeschicht gegenüberliegt und eine gleitende Lagerung eines zweiten Bauteils gegenüber dem ersten Bauteil ermöglicht. Die erfindungsgemäße Gleitelementanordnung bietet dagegen zwei gleichwertige Gleitflächen an, durch welche ebenfalls gute Gleitlagereigenschaften erzielt werden.

Prinzipiell gibt es zwei Möglichkeiten, ein erstes Bauteil mit Hilfe herkömmlicher Gleitlagerbuchsen auf einem zweiten Bauteil zu lagern. Erstens mit einer Gleitlagerbuchse, welche in dem ersten Bauteil reibschlüssig festgelegt ist und zweitens mit einer Gleitlagerbuchse, welche in dem zweiten Bauteil reibschlüssig festgelegt ist. Jede dieser Möglichkeiten wird mit einer separaten Gleitlagerbuchse realisiert. Die erfindungsgemäße Gleitlageranordnung hingegen realisiert beide Funktionen in einem Bauteil. Da die Lagerbuchse der Gleitlageranordnung zwei gleichwertige Gleitflächen bietet, können mit ihr beide der o.g. Möglichkeiten - allein über die Einstellung der Oberflächenrauhigkeiten der Gleit- bzw. Reibpartner - realisiert werden.

Des Weiteren lässt sich eine Gleitelementanordnung mit identischen Gleitflächen günstiger und schneller z.B. durch Spritzguss herstellen. Im Gegensatz zu bisher im Stand der Technik verwendeten Gleitlagern, welche z.B. aus einem Bronzegrundgewebe und anschließend aufgelagertem PTFE bestehen.

Bei dem bisherigen Stand der Technik mussten unterschiedliche Grenzflächen und Materialpaarungen ausgelegt werden. Dieser Aufwand ist bei den beiden erfindungsgemäßen gleichwertigen Gleitflächen reduziert.

Mit den Gleitflächen, die Polyamid 4.6 und identische Oberflächeneigenschaften aufweisen, lassen sich die Anforderungen bezüglich der Gleitlagerung bzw. auch bezüglich der Reibdämpfung des Spannarms trotzdem gut realisieren.

In einer weiteren Ausführungsform der Erfindung kann die Gleitelementanordnung, insbesondere ihre Gleitflächen, aus Polyamid 4.6 mit einer Beimischung von PTFE bestehen. Dieses Material gewährleistet eine gute Verschleißfestigkeit und eine hohe Lebensdauer.

Bei einer vorteilhaften Ausführungsform der Erfindung kann die Gleitelementanordnung wenigstens ein Spritzgussteil aufweisen. Im Spritzguss ist ein Gleitelement mit gleichartigen Gleitflächen einfach, schnell und kostengünstig herzustellen.

Bei einer weiteren Variante der Erfindung kann die Lagereinrichtung aus demselben Werkstoff wie die Lagerhülse hergestellt sein. Dies vereinfacht die Konstruktion und damit die Auslegung weiter, da in diesem Fall stets dieselben Materialpaarungen auftreten.

In einem günstigen Ausführungsbeispiel der Erfindung kann die Gleitelementanordnung eine Gleitscheibe aufweisen, welche zwischen einer Stützscheibe der Lagereinrichtung und einer unteren axialen Stirnfläche der Lagerhülse angeordnet ist, wobei die Gleitscheibe sowohl gegenüber der Stützscheibe als auch gegenüber der Lagerhülse verdrehbar ist. Damit ist es für den Einbau der Gleitscheibe unerheblich, welche der beiden Gleitflächen auf der Stützscheibe bzw. der Lagerbuchse zu liegen kommt. Dies reduziert die Fehleranfälligkeit in der Montage. Die Gleitpaarung reduziert zudem die Kräfte, welche von der Lagerhülse auf die Stützscheibe übertragen werden.

Symmetrische Bauteile, wie z.B. Gleitscheiben, mussten in dem Stand der Technik wegen der unterschiedlichen Oberflächen gerichtet eingesetzt werden. Da die erfindungsgemäße Gleitelementanordnung zwei gleichwertige, gegenüberliegende Gleitflächen aufweist, kann nun auch ein umgekehrter Einbau erfolgen. Dies reduziert die Fehleranfälligkeit in der Montage.

In einer vorteilhaften Variante der Erfindung kann die Stützscheibe eine Oberfläche und eine Unterfläche mit gleichen Oberflächeneigenschaften aufweisen. So wird die Fehleranfälligkeit der Montage weiter reduziert.

Günstigerweise kann die Stützscheibe eine polierte Ober- und Unterfläche aufweisen. Dies reduziert die Reibung zwischen der Stützscheibe und der Gleitscheibe und trägt somit zum ungehinderten Gleiten der Lagerhülse gegenüber der Stützscheibe bei. Die Drehbewegungen der Lagerhülse werden durch die sehr geringe Reibung somit kaum auf die Stützscheibe übertragen. Die polierte Unterfläche der Stützscheibe, welche der Anlage weiterer Baukomponenten dient, gibt durch den geringen Reibbeiwert ihrer Oberfläche eventuell dennoch auftretende Bewegungen auch sehr schlecht weiter.

Bei einer vorteilhaften Ausführungsform der Erfindung kann die Stützscheibe eine Ober- und Unterfläche mit geringer Oberflächenrauhigkeit mit R_{z} < 8 µm aufweisen. Dies ermöglicht eine effiziente Reduzierung der Kraftübertragung von der Lagerhülse auf die Stützscheibe sowie auf weitere, an dieser anliegende Bauteile.

In einer Variante der Erfindung kann die Lagerbuchse zwischen einem Rohrbolzen der Lagereinrichtung und der Lagerhülse angeordnet sein, wobei die Lagerbuchse sowohl gegenüber der Lagerhülse als auch gegenüber dem Rohrbolzen verdrehbar ist. Durch die beiden gleichwertigen Gleitlagerflächen ist es konstruktiv nicht mehr wichtig sich auf eine Gleitpaarung festzulegen. Konstruktionsänderungen sind somit schnell und unkompliziert möglich und lassen sich meist mit derselben, bisher verwendeten Lagerbuchse realisieren. Ein alter Lagerbestand kann daher auch nach einer Konstruktionsänderung weiterverbaut werden.

Vorteilhafterweise kann eine äußere Mantelfläche des Rohrbolzens eine geringe Oberflächenrauhigkeit mit R_{z} < 8 µm aufweisen. Dies ermöglicht eine gute Gleitlagerung der Lagerhülse und somit eine gute Verschwenkbarkeit des Spannarms.

In einer weiteren Ausführungsform der Erfindung kann eine Innenseite der Lagerhülse eine geringe Oberflächenrauhigkeit mit R_{Z} < 8 µm aufweisen. Dies gewährleistet ebenfalls eine gute Gleitlagerung der Lagerhülse und stellt somit eine weitere, gleichwertige Gleitpaarung dar.

In einer günstigen Ausführung der Erfindung kann die die Dämpfungsscheibe rotationssymmetrisch bezüglich ihres Mittelpunkts sein. Durch diese allgemeine Scheibenform lässt sich die Dämpfungsscheibe leicht mit anderen Scheiben z.B. mit einer Gleitscheibe zusammenfassen. Die Anzahl der unterschiedlichen Einzelbauteile kann somit weiter reduziert werden.

Bei einer Variante der Erfindung kann die obere axiale Stirnfläche der Lagerhülse eine größere Oberflächenrauhigkeit aufweisen als die der Lagerhülse zugewandte Fläche der Frontscheibe. Durch die erhöhte Oberflächenrauhigkeit wird die Dämpfungsscheibe auf der Stirnfläche der Lagerhülse festgelegt. Die Dämpfung kann somit über die Oberflächenrauhigkeit der Frontscheibe eingestellt werden.

Günstigerweise kann die der Lagerhülse zugewandte Fläche der Frontscheibe eine Oberflächenrauhigkeit im Bereich von ca. R_{z} = 10 bis 25 µm aufweisen. Dies gewährleistet eine gute Dämpfung des Spannarms.

In einer Variante der Erfindung kann die obere axiale Stirnfläche der Lagerhülse wenigstens bereichsweise eine hohe Oberflächenrauhigkeit R_{z} im Bereich von ca. 10 bis 25 µm aufweisen. Dies ermöglicht eine ausreichend gute Festlegung der Gleitscheibe bei einer Verdrehung der Lagerhülse gegenüber der Frontscheibe.

Bei einer vorteilhaften Ausführungsform der Erfindung kann die obere axiale Stirnfläche der Lagerhülse wenigstens bereichsweise sandgestrahlt sein. So lässt sich die gewünschte Oberflächenrauhigkeit gut herstellen.

Günstigerweise kann der Werkstoff der Lagereinrichtung etwa denselben Wärmeausdehnungskoeffizienten aufweisen wie der Werkstoff der Lagerhülse. Materialien mit gleichem Wärmeausdehnungskoeffizienten gewährleisten eine gute Maßhaltigkeit und eine gute Beibehaltung der Toleranzen über den gesamten Temperaturverlauf. Das bedeutet auch eine etwa gleichbleibend gute Wirkweise des Riemenspanners bei Temperaturschwankungen.

Im Folgenden wird ein Ausführungsbeispiel der Erfindung anhand der folgenden Figur beschrieben. Dabei zeigen:

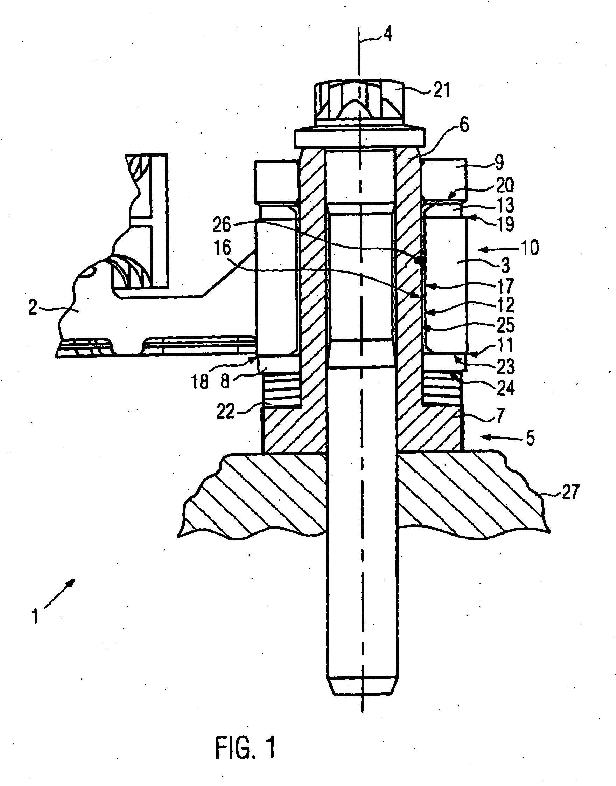

- Figur 1: einen Schnitt durch die Lagerung eines Spannarms eines erfindungsgemäßen Riemenspanners.

Figur 1 zeigt einen Schnitt durch die Lagerung eines Spannarms 2 eines erfindungsgemäßen Riemenspanners 1. Die Erfindung wird hier beispielhaft anhand eines Riemenspanners mit einem Spannarm beschrieben. Dennoch trifft die Erfindung auch auf Riemenspanner mit mehreren Spannarmen zu.

Der Riemenspanner 1 weist einen Spannarm 2 auf, welcher in diesem Ausführungsbeispiel einstückig mit einer Lagerhülse 3 ausgebildet ist. Alternativ könnten die Lagerhülse 3 und der Spannarm 2 auch als zwei fest miteinander verbundene Einzelteile ausgebildet sein. Die Lagerhülse 3 und damit auch der Spannarm 2 sind in diesem Ausführungsbeispiel aus Aluminium oder einer Aluminiumlegierung z.B. durch Kaltfließpressen oder Druckguss gefertigt. Es sind jedoch auch andere Materialien wie z.B. unterschiedliche Stähle sowie andere Herstellungsverfahren wie z.B. Gießen, Schmieden oder Fräsen für diese beiden Bauteile denkbar.

Der Spannarm 2 und die Lagerhülse 3 sind um eine Schwenkachse 4 drehbar auf einer zentralen Lagereinrichtung 5 angeordnet. In diesem Ausführungsbeispiel weist die zentrale Lagereinrichtung 5 mehrere Einzelteile auf. Sie besteht hier aus einem Rohrbolzen 6, welcher an seinem unteren axialen Ende einen einstückig angeformten Flansch 7 aufweist, einer Stützscheibe 8 und einer Frontscheibe 9. Alternativ kann die Lagereinrichtung 5 jedoch auch aus zusätzlichen, weiteren Elementen bestehen. So kann der Flansch 7 z.B. als separate Scheibe ausgebildet sein, welche axial und verdrehfest mit dem Rohrbolzen 6 verbunden ist. Umgekehrt ist auch eine Reduzierung der Bauteile möglich in dem Einzelbauteile der Lagereinrichtung einstückig miteinander oder mit anderen Bauteilen des Riemenspanners ausgebildet werden. Die Lagereinrichtung 5 besteht in diesem Ausführungsbeispiel aus demselben Material wie die Lagerbuchse. Sie ist aus Aluminium oder einer Aluminiumlegierung durch Kaltfließpressen gefertigt. Alternativ sind für die Lagereinrichtung 5 die gleichen Materialien und Herstellungsverfahren wie für die Lagerhülse denkbar. Obwohl die Lagereinrichtung 5 und die Lagerhülse 3 in diesem vorteilhaften Ausführungsbeispiel gleiche Materialien aufweisen, können in anderen Varianten der Erfindung auch unterschiedliche Materialien vorgesehen sein.

Die Lagerhülse 3 ist in der Lagereinrichtung 5 mittels einer Gleitelementanordnung 10 gelagert. Die Gleitelementanordnung 10 weist in diesem Ausführungsbeispiel ebenfalls mehrere Einzelbauteile, nämlich eine Gleitscheibe 11, eine Lagerbuchse 12 und eine Dämpfungsscheibe 13 auf. Die Gleitelementanordnung 10 besteht aus Polyamid 4.6 mit einer Beimischung von PTFE.

In diesem Ausführungsbeispiel ist die Gleitelementanordnung 10 ein Spritzteil und durch und durch homogen aufgebaut. Das heißt, die Verteilung des PTFE in dem Polyamidgrundstoff ist gleichmäßig. Dies muss jedoch nicht zwangsläufig der Fall sein. Bei anderen Varianten kann das PTFE auch stellenweise in das Polyamid eingelagert bzw. eingesetzt sein. Alternativ kann die Gleitelementanordnung 10 auch mit anderen Herstellungsverfahren wie z. B. Gießen oder Laminieren hergestellt sein. Durch die spezielle Ausformung der Gleitelementanordnung 10 ergeben sich für jedes der Einzelteile 11, 12, 13 der Gleitelementanordnung 10 zwei identische Gleitflächen. Das heißt sowohl die Gleitscheibe 11 als auch die Dämpfungsscheibe 13 weisen auf ihrer Vorderfläche identische Gleiteigenschaften wie auf ihrer Rückseite auf. Auch die Lagerbuchse 12 weist an ihrer inneren Mantelfläche 16 und an ihrer äußeren Oberfläche 17 identische Oberflächeneigenschaften auf.

Zwischen dem Flansch 7 und der Stützscheibe 8 der Lagereinrichtung 5 ist ein Federelement z.B. eine oder mehrere Tellerfedern 22 angeordnet. Die Stützscheibe 8 dient der gleichmäßigen Übertragung der Federkraft auf die untere axiale Stirnfläche 18 der Lagerhülse 3. Sie ist, wie die gesamte Lagereinrichtung 5 aus Aluminium gefertigt. Alternativ sind jedoch auch für die Stützscheibe andere Materialien und Herstellungsverfahren möglich. Die Stützscheibe 8 könnte beispielsweise auch aus einem beliebigen Stahl z.B. durch Schmieden, Fräsen oder Drehen gefertigt sein. Die obere 23 wie auch die untere Fläche 24 der Stützscheibe 8 weisen eine niedrige Oberflächenrauhigkeit und somit einen geringen Reibwert auf und sind z.B. durch Kugelrollieren, Polieren oder andere gängige Behandlungsverfahren hergestellt. Zwischen der Stützscheibe 8 und der unteren axialen Stirnfläche 18 der Lagerbuchse 3 befindet sich die Gleitscheibe 11 der Gleitelementanordnung 10.

Zwischen einer oberen axialen Stirnläche 19 der Lagerhülse 3 und der Frontscheibe 9 der Lagereinrichtung 5 ist die Dämpfungsscheibe 13 der Gleitelementanordnung 10 vorgesehen. Die Oberfläche der oberen axialen Stirnfläche 19 der Lagerhülse 3 weist wenigstens abschnittsweise eine hohe Oberflächenrauhigkeit von mindestens R_{Z} : 10 µm auf. Diese kann z.B. durch Sandstrahlen oder andere gängige Oberflächenbehandlungen erzeugt werden. Die Oberflächenrauhigkeit der Fläche 20 der Frontscheibe 9, welche der Lagerhülse 3 zugewandt ist, liegt im Bereich von ca. 10 bis 25 µm. Sie ist in diesem Ausführungsbeispiel geringer als die Oberflächenrauhigkeit der Stirnfläche 19. In anderen Varianten der Erfindung kann es sich jedoch genau umgekehrt verhalten. In besonderen Anwendungsfällen ist auch eine etwa gleiche Oberflächenrauhigkeit der Stirnfläche 19 und der Fläche 20 der Frontscheibe denkbar.

Ein Befestigungselement hier z.B. ein Schraubbolzen 21 erstreckt sich durch die Lagereinrichtung 5 hindurch und legt den Riemenspanner 1 an einem Bauteil 27 einer Verbrennungskraftmaschine fest. Der Kopf des Schraubbolzens 21 liegt dabei auf der Frontscheibe 9 auf.

Im Folgenden wird die Funktionsweise des in der Figur dargestellten erfindungsgemäßen Ausführungsbeispiels erläutert.

Durch das Verschrauben des Schraubbolzens 21 mit einem Motorbauteil 27 wird der Riemenspanner 1 dreh- und axialfest an dem Motor befestigt und die Anordnung der Lagerhülse 3 auf der Lagereinrichtung 5 axial gesichert. Gleichzeitig wird die Frontscheibe 9 mittels der Federn 22 gegen die obere axiale Stirnfläche 19 der Lagerhülse 3 gespannt. Die Dämpfungsscheibe 13 wird somit vorgespannt.

Wird der Spannarm 2 des Riemenspanners 1 nun z.B. durch einen Lastwechsel des Riemens ausgelenkt, dreht sich die Lagerhülse 3 um die Lagereinrichtung 5. Sie ist dabei radial durch die Lagerbuchse 12 und axial durch die Gleitscheibe 11 sowie die Dämpfungsscheibe 13 gelagert.

Die Lagerbuchse 12 wie auch die Dämpfungsscheibe 13 sind mit Oberflächen gepaart, welche eine relativ geringe Oberflächenrauhigkeit aufweisen und ermöglichen somit ein gutes Gleiten und damit Schwenken der Lagerhülse 3 um die Lagereinrichtung 5. Die Gleitscheibe 13 ist mit der polierten Oberfläche 23 der Stützscheibe 8 gepaart. Diese Oberflächenpaarung ermöglicht es, dass möglichst wenig Reibung und damit Rotationskraft von der sich drehenden Lagerhülse 3 auf die Stützscheibe 8 übertragen wird. Auch die Unterseite 24 der Stützscheibe 8, welche als Anlagefläche für die Tellerfedern 22 dient, ist poliert. Sollte die Stützscheibe 8 dennoch eine geringe Kraft erfahren und sich dadurch bewegen, gleitet die polierte Fläche auf den Federn und verhindert durch den niedrigen Reibbeiwert so ein Mitdrehen oder Verschieben der Tellerfedern 22.

Das Schwenken des Spannarms 2 und damit der Lagerhülse 3 um die Lagereinrichtung 5 bewirkt gleichzeitig auch eine Dämpfung der Spannarmbewegung. Die Dämpfungsscheibe 13 ist durch die Tellerfedern 22 und den Schraubbolzen 21 vorgespannt. Da die obere axiale Stirnfläche 19 der Lagerhülse 3 eine größere Oberflächenrauhigkeit aufweist als die der Lagerhülse 3 zugewandte Fläche 20 der Frontscheibe 9, wird die Dämpfungsscheibe 13, aufgrund der Reibung, von der Lagerhülse 3 mitgenommen. Das heißt, sie dreht sich mit der Lagerhülse 3 um die Lagereinrichtung 5. Dabei entsteht eine Relativbewegung der Dämpfungsscheibe 13 gegenüber der der Lagerhülse 3 zugewandten Fläche 20 der Frontscheibe 9. Die Oberflächenrauhigkeit dieser Fläche 20 ist so eingestellt, dass zusammen mit der Vorspannung eine definierte Reibdämpfung entsteht.

## Patentansprüche

1. Riemenspanner (1) für einen Riementrieb einer Verbrennungskraftmaschine, mit einer zentralen Lagereinrichtung (5), durch welche eine Schwenkachse (4) für den Riemenspannarm (2) definiert ist, und einer mit dem Spannarm (2) verbundenen Lagerhülse (3), wobei sich die Lagereinrichtung (5) durch die Lagerhülse (3) hindurcherstreckt und die Lagerhülse (3) mittels einer Gleitelementanordnung (10) reibdämpfend um die Lagereinrichtung (5) schwenkbar ist, wobei die Gleitelementanordnung (10) eine Lagerbuchse (12) mit einer inneren Mantelfläche (16) und einer äußeren Oberfläche (17), sowie eine Dämpfungsscheibe (13) aufweist, und die Dämpfungsscheibe zwischen einer Frontscheibe (9) der Lagereinrichtung (5) und einer oberen axialen Stirnfläche (19) der Lagerhülse (3) angeordnet ist,
**dadurch gekennzeichnet, dass**
die Lagerbuchse und die Dämpfungsscheibe aus durchgehend homogenem Material ausgebildet sind, und die innere Mantelfläche (16), die äußere Oberfläche (17) und die zwei Gleitflächen der Dämpfungsscheibe als Gleitflächen identische Oberflächeneigenschaften aufweisen und Polyamid 4.6 aufweisen.

2. Riemenspanner nach wenigstens einem der vorhergehenden Ansprüche,
**dadurch gekennzeichnet,**
**dass** die Gleitelementanordnung (10), insbesondere ihre Gleitflächen, aus Polyamid 4.6 mit einer Beimischung von PTFE besteht.

3. Riemenspanner nach wenigstens einem der vorhergehenden Ansprüche,
**dadurch gekennzeichnet,**
**dass** die Gleitelementanordnung (10) wenigstens ein Spritzgussteil aufweist.

4. Riemenspanner nach wenigstens einem der vorhergehenden Ansprüche,
**dadurch gekennzeichnet,**
**dass** die Lagereinrichtung (5) aus demselben Werkstoff wie die Lagerhülse (3) hergestellt ist.

5. Riemenspanner nach wenigstens einem der vorhergehenden Ansprüche,
**dadurch gekennzeichnet,**
**dass** die Gleitelementanordnung (10) eine Gleitscheibe (11) aufweist, welche zwischen einer Stützscheibe (8) der Lagereinrichtung (5) und einer unteren axialen Stirnfläche (18) der Lagerhülse (3) angeordnet ist, wobei die Gleitscheibe (11) sowohl gegenüber der Stützscheibe (8) als auch gegenüber der Lagerhülse (3) verdrehbar ist.

6. Riemenspanner nach Anspruch5,
**dadurch gekennzeichnet,**
**dass** die Stützscheibe (8) eine Oberfläche (23) und eine Unterfläche (24) mit gleichen Oberflächeneigenschaften aufweist.

7. Riemenspanner nach wenigstens einem der Ansprüche 5 und 6,
**dadurch gekennzeichnet,**
**dass** die Stützscheibe (8) eine polierte Ober- (23) und Unterfläche (24) aufweist.

8. Riemenspanner nach wenigstens einem der Ansprüche 5 bis 7,
**dadurch gekennzeichnet,**
**dass** die Stützscheibe eine Ober- und Unterfläche mit geringer Oberflächenrauhigkeit mit R_{z} kleiner 8 µm aufweist.

9. Riemenspanner nach wenigstens einem der vorhergehenden Ansprüche,
**dadurch gekennzeichnet,**
**dass** die Lagerbuchse (12) zwischen einem Rohrbolzen (6) der Lagereinrichtung (5) und der Lagerhülse (3) angeordnet ist, wobei die Lagerbuchse (12) sowohl gegenüber der Lagerhülse (3) als auch gegenüber dem Rohrbolzen (6) verdrehbar ist.

10. Riemenspanner nach Anspruch 9,
**dadurch gekennzeichnet,**
**dass** eine äußere Mantelfläche (25) des Rohrbolzens (6) eine geringe Oberflächenrauhigkeit R_{z} kleiner 8 µm aufweist.

11. Riemenspanner nach wenigstens einem der vorhergehenden Ansprüche,
**dadurch gekennzeichnet,**
**dass** eine Innenseite (26) der Lagerhülse (3) eine geringe Oberflächenrauhigkeit R_{z} kleiner 8 µm aufweist.

12. Riemenspanner nach wenigstens einem der vorhergehenden Ansprüche,
**dadurch gekennzeichnet,**
**dass** die Dämpfungsscheibe (13) rotationssymmetrisch bezüglich ihres Mittelpunkts ist.

13. Riemenspanner nach Anspruch 12,
**dadurch gekennzeichnet,**
**dass** die obere axiale Stirnfläche (19) der Lagerhülse (3) eine größere Oberflächenrauhigkeit aufweist als die der Lagerhülse (3) zugewandte Fläche (20) der Frontscheibe (9).

14. Riemenspanner nach wenigstens einem der Ansprüche 12und 13,
**dadurch gekennzeichnet,**
**dass** die der Lagerhülse (3) zugewandte Fläche (20) der Frontscheibe (9) eine Oberflächenrauhigkeit im Bereich von R_{z} ca. 10 bis 25 µm aufweist.

15. Riemenspanner nach wenigstens einem der Ansprüche 12 und 13,
**dadurch gekennzeichnet,**
**dass** die obere axiale Stirnfläche (19) der Lagerhülse (3) wenigstens bereichsweise eine hohe Oberflächenrauhigkeit im Bereich von R_{z} > 10 µm aufweist.

16. Riemenspanner nach wenigstens einem der Ansprüche 12, 13 und 15,
**dadurch gekennzeichnet,**
**dass** die obere axiale Stirnfläche (19) der Lagerhülse (3) wenigstens bereichsweise sandgestrahlt ist.

17. Riemenspanner nach wenigstens einem der vorhergehenden Ansprüche,
**dadurch gekennzeichnet,**
**dass** der Werkstoff der Lagereinrichtung (5) annähernd denselben Wärmeausdehnungskoeffizienten aufweist wie der Werkstoff der Lagerhülse (3).

## Claims

1. Belt tensioner (1) for a belt drive of an internal combustion engine, comprising a central bearing device (5) by means of which a pivot axis (4) for the belt tensioning arm (2) is defined, and having a bearing sleeve (3) which is connected to the tensioning arm (2), wherein the bearing device (5) extends through the bearing sleeve (3) and the bearing sleeve (3) is mounted, in a friction-damping manner by means of a sliding element arrangement (10), so as to be pivotable about the bearing device (5), wherein the sliding element arrangement (10) comprises a bearing bushing (12) having an inner surface (16) and an outer surface (17), as well as a damping disk (13) which is arranged between a front disk (9) of the bearing device (5) and an upper axial end face (19) of the bearing sleeve (3), **characterised in that** the bearing sleeve and the damping disk are made from completely homogeneous material and the inner surface (16), the outer surface (17) and the two sliding surfaces of the damping disk have identical surface properties and comprise polyamide 4.6.

2. Belt tensioner according to at least one of the preceding claims, **characterised in that** the sliding element arrangement (10), in particular the sliding surfaces thereof, is made of polyamide 4.6 with PTFE added.

3. Belt tensioner according to at least one of the preceding claims, **characterised in that** the sliding element arrangement (10) comprises at least one injection moulded part.

4. Belt tensioner according to at least one of the preceding claims, **characterised in that** the bearing device (5) is made of the same material as the bearing sleeve (3).

5. Belt tensioner according to at least one of the preceding claims, **characterised in that** the sliding element arrangement (10) comprises a sliding disk (11) which is arranged between a support disk (8) of the bearing device (5) and a lower axial end face (18) of the bearing sleeve (3), wherein the sliding disk (11) is twistable both relative to the support disk (8) and relative to the bearing sleeve (3).

6. Belt tensioner according to claim 5, **characterised in that** the support disk (8) comprises an upper surface (23) and a lower surface (24) having the same surface properties.

7. Belt tensioner according to at least one of the claims 5 or 6, **characterised in that** the support disk (8) comprises a polished upper surface (23) and lower surface (24).

8. Belt tensioner according to at least one of the claims 5 to 7, **characterised in that** the support disk comprises an upper surface and a lower surface with reduced surface roughness Rz of less than 8 µm.

9. Belt tensioner according to at least one of the preceding claims, **characterised in that** the bearing bushing (12) is arranged between a tubular spigot (6) of the bearing device (5) and the bearing sleeve (3), wherein the bearing bushing (12) is twistable both relative to the bearing sleeve (3) and relative to the tubular spigot (6).

10. Belt tensioner according to claim 9, **characterised in that** an outer surface (25) of the tubular spigot (6) has a low surface roughness R_{z} of less than 8 µm.

11. Belt tensioner according to at least one of the preceding claims, **characterised in that** an interior side (26) of the bearing sleeve (3) has a low surface roughness Rz of less than 8 µm.

12. Belt tensioner according to at least one of the preceding claims, **characterised in that** the damping disk (13) has rotational symmetry in relation to the mid-point thereof.

13. Belt tensioner according to claim 12, **characterised in that** the upper axial end face (19) of the bearing sleeve (3) has a greater surface roughness than the surface (20) of the front disk (9) facing toward the bearing sleeve (3).

14. Belt tensioner according to at least one of the claims 12 and 13, **characterised in that** the surface (20) of the front disk (9) facing the bearing sleeve (3) has a surface roughness R_{z} in the region of approximately 10 µm to 25 µm.

15. Belt tensioner according to at least one of the claims 12 and 13, **characterised in that** the upper axial end face (19) of the bearing sleeve (3) has, at least partially, a high surface roughness R_{z} in the region of > 10 µm.

16. Belt tensioner according to one of the claims 12, 13 and 15, **characterised in that** the upper axial end face (19) of the bearing sleeve (3) is at least partially sandblasted.

17. Belt tensioner according to at least one of the preceding claims, **characterised in that** the material of the bearing device (5) has almost the same coefficient of thermal expansion as the material of the bearing sleeve (3).

## Revendications

1. Tendeur de courroie (1) pour un entraînement à courroie de moteur à combustion interne, avec un dispositif de palier central (5) à travers lequel un axe de pivotement (4) pour le bras de tendeur de courroie (2) est défini et une douille de palier (3) reliée au bras de tendeur (2), dans lequel le dispositif de palier (5) s'étend à travers la douille de palier (3) et la douille de palier (3) peut pivoter à l'aide d'un agencement à élément glissant (10) autour du dispositif de palier (5) en limitant les frottements, dans lequel l'agencement à élément glissant (10) comporte un manchon de palier (12) avec une surface de manchon interne (16) et une surface externe (17), ainsi qu'un rondelle d'amortissement (13), et la rondelle d'amortissement est agencée entre une rondelle frontale (9) du dispositif de palier (5) et une surface frontale axiale supérieure (19) de la douille de palier (3),
**caractérisé**
**en ce que** le manchon de palier et la rondelle d'amortissement sont constitués d'un matériau entièrement homogène et en ce que la surface du manchon interne (16), la surface externe (17) et les deux surfaces de glissement de la rondelle d'amortissement présentent des surfaces de glissement à propriétés de surface identiques et comportent du polyamide 4.6.

2. Tendeur de courroie selon au moins l'une des revendications précédentes,
**caractérisé**
**en ce que** l'agencement à élément glissant (10), et en particulier ses surfaces de glissement, est constitué de polyamide 4.6 avec une adjonction de PTFE.

3. Tendeur de courroie selon au moins l'une des revendications précédentes,
**caractérisé**
**en ce que** l'agencement à élément glissant (10) comporte au moins un élément moulé par injection.

4. Tendeur de courroie selon au moins l'une des revendications précédentes,
**caractérisé**
**en ce que** le dispositif de palier (5) est constitué du même matériau que la douille de palier (3).

5. Tendeur de courroie selon au moins l'une des revendications précédentes,
**caractérisé**
**en ce que** l'agencement à élément glissant (10) comporte une rondelle de glissement (11) qui est agencée entre une rondelle de support (8) du dispositif de palier (5) et une surface frontale axiale inférieure (18) de la douille de palier (3), dans lequel la rondelle de glissement (11) peut être tournée aussi bien par rapport à la rondelle de support (8) que par rapport à la douille de palier (3).

6. Tendeur de courroie selon la revendication 5,
**caractérisé**
**en ce que** la rondelle de support (8) comporte une surface supérieure (23) et une surface inférieure (24) à propriétés de surface identiques.

7. Tendeur de courroie selon au moins l'une des revendications 5 et 6,
**caractérisé**
**en ce que** la rondelle de support (8) comporte une surface supérieure (23) et une surface inférieure (24) polies.

8. Tendeur de courroie selon au moins l'une des revendications 5 à 7,
**caractérisé**
**en ce que** la rondelle de support comporte une surface supérieure et une surface inférieure à faible rugosité de surface R_{z} inférieure à 8 µm.

9. Tendeur de courroie selon au moins l'une des revendications précédentes,
**caractérisé**
**en ce que** le manchon de palier (12) est agencé entre un axe tubulaire (6) du dispositif de palier (5) et la douille de palier (3), dans lequel le manchon de palier (12) peut être tourné aussi bien par rapport à la douille de palier (3) que par rapport à l'axe tubulaire (6).

10. Tendeur de courroie selon la revendication 9,
**caractérisé**
**en ce qu'**une surface de manchon externe (25) de l'axe tubulaire (6) présente une faible rugosité de surface R_{z} inférieure à 8 µm.

11. Tendeur de courroie selon au moins l'une des revendications précédentes,
**caractérisé**
**en ce qu'**un côté interne (26) de la douille de palier (3) présente une faible rugosité de surface R_{z} inférieure à 8 µm.

12. Tendeur de courroie selon au moins l'une des revendications précédentes,
**caractérisé**
**en ce que** la rondelle d'amortissement (13) est symétrique en rotation par rapport à son point central.

13. Tendeur de courroie selon la revendication 12,
**caractérisé**
**en ce que** la surface frontale axiale supérieure (19) de la douille de palier (3) présente une rugosité de surface supérieure à celle de la surface (20) de la rondelle frontale (9) faisant face à la douille de palier (3).

14. Tendeur de courroie selon au moins l'une des revendications 12 et 13,
**caractérisé**
**en ce que** la surface (20) de la rondelle frontale (9) faisant face à la douille de palier (3) présente une rugosité de surface R_{z} comprise environ entre 10 µm et 25 µm.

15. Tendeur de courroie selon au moins l'une des revendications 12 et 13,
**caractérisé**
**en ce que** la surface frontale axiale supérieure (19) de la douille de palier (3) présente au moins sur certaines zones une forte rugosité de surface comprise dans une plage R_{z} > 10 µm.

16. Tendeur de courroie selon au moins l'une des revendications 12, 13 et 15,
**caractérisé**
**en ce que** la surface frontale axiale supérieure (19) de la douille de palier (3) est sablée au moins sur certaines zones.

17. Tendeur de courroie selon au moins l'une des revendications précédentes,
**caractérisé**
**en ce que** le matériau du dispositif de palier (5) présente approximativement le même coefficient de dilatation thermique que le matériau de la douille de palier (3).
